# EUROPEAN PATENT APPLICATION

(11) **EP 4 653 099 A1**
(43) Date of publication of application: **26.11.2025**
(21) Application number: 25460019.0
(22) Date of filing: 12.05.2025
(51) Int. Cl.: B07B 1/00, B07B 13/16, B65G 21/12, B65G 41/00

(54) **SCREENING MACHINE UNIT**

(30) Priority: 23.05.2024 PL 44866224
(71) Applicant: Pronar Spolka Z Ograniczona Odpowiedzialnoscia, 17-210 Narew (PL)
(72) Inventor: Kot, Mariusz, 17-200 Hajnówka (PL)
(74) Representative: Dobkowska, Danuta Elzbieta

(57) **Abstract**

The subject of the invention is a screening machine unit used to separate waste.

The screening machine unit containing a frame (1) with the infeed conveyor (1b) attached in a rotary manner, with the conveyor belt (2) located below the infeed conveyor, characterised in that the conveyor belt (2) is attached to the infeed conveyor (1b) using the engaging half-frames (3) with the running rollers (4), which are connected stationary with the infeed conveyor (1b) using a removable screw connection. They are connected with the conveyor belt (2) in a sliding manner using the linear extension system containing the rollers (4) and the guide assembly (6), constituting the left guide (5L) and the right guide (5P) connected in a sliding manner with the conveyor belt (2). The linear movement of the conveyor belt (2) along the right guide (5P) and the left guide (5L) constitutes the size of the area of separation (2.1) relative to the infeed conveyor (1b). The hydraulic actuator (H1) is located between the engaging half-frames (3) and the guide assembly (6), and the second hydraulic actuator (H2) is located between the guide assembly (6) and the conveyor belt (2).

## Description

The subject of the invention is a screening machine unit used to separate waste in terms of its structure and shape.

The most frequently used screening machines used to separate waste in terms of its structure, fraction size, and shape include ballistic separators, which are suitable mainly for waste sorting stations to separate waste into two or three groups. The material to be separated is supplied to the separator chamber using a conveyor belt, and then it is guided to the separation area. The screening elements' movement causes the material to become loose. As a result, the flat-shaped light fraction (such as foil, paper, or cardboard) is carried to the top part of the machine and spilt down to the ground - into a container intended for a particular fraction or onto a collecting conveyor. Spatial fractions (such as wood, plastic bottles, cans, or stones) reflect from the separator's bar and fall down gravitationally inside the machine. The separator bars very often have screening openings through which the finest fraction, i.e., sand, food, or residue, falls below the machine, whence it is collected. To adjust separation, the angle of inclination is used that allows the angle of incidence to be adjusted quickly and automatically so as to optimise the separation capacity depending on the type of segregated waste without interrupting the sorting process.

WO2012072656 discloses a mobile machine for ballistic sorting and screening comprising a chassis, at least one ballistic separator, which can be inclined around a rotary pin embedded on a trailer chassis between the transport position and the working position, and at least one lateral collecting conveyor attached to the ballistic separator using a parallelogram-shaped link mechanism that maintains said at least one lateral collecting conveyor parallel to the longitudinal axis of the chassis irrespectively of the ballistic separator inclination. The ballistic separator inclination can be adjusted using at least one hydraulic actuator attached between the ballistic separator and the trailer chassis. Lifts can be provided, for example, with a locking element that, when locked, prevents any changes to the ballistic separator inclination, in particular during operation. The ballistic separator comprises screened and corrugated bars that move forward and upward as a result of rotary movement of crankshafts. With this double movement, waste can be sorted. Hollow and rigid spatial waste, such as empty bottles, are discharged downward, whereas flexible and flat waste, such as foil or paper, are discharged upward. Waste discharged from above is handled by the top conveyor belt mounted at the top of the ballistic separator. Waste discharged from below is collected by the remote conveyor belt mounted on the chassis and located at the back of the ballistic separator. The ballistic separator bars can be perforated, which means they can have small openings for fine material. During waste treatment, fine particles pass through the screens and fall down to the bottom of the ballistic separator where at least one dust conveyor is located. It collects fine particles falling through the screens and carries them at least to the level of one lateral emergency conveyor in order to remove them from the mobile sorting and screening ballistic unit, e.g., to a waste container, or to lay them out in the form of a temporary pile on the ground. At least the first lateral collecting conveyor is attached to the ballistic separator using a parallelogram-shaped link mechanism and maintains said first lateral collecting conveyor parallel to the longitudinal axis of the chassis. In the transport position, an infeed conveyor belt is mounted between the ballistic separator's side walls, whereas lateral protrusions are inserted into V-shaped slots in the ballistic separator's side walls. Such a layout and slots allow the conveyor to be locked and prevent any lateral and forward-backward movements during transport. In the transport position, the ballistic sorting and screening unit meets the dimensions specified in the traffic code thanks to optimised modularity, which means that when the unit is to be shipped, it does not require any specific convoy.

EP2377784 presents a conveyor belt comprising two conveyors, a first conveyor and a second conveyor, provided with lateral bars made of longitudinal sections. The lateral bars of the first conveyor have extruded profiles with a shape that fits the shape of the profiles of the lateral bars of the second conveyor, whereas the shaped mating profiles allow relative sliding movement between the first conveyor and the second conveyor. Linear sliding elements on the top and bottom extruded lateral bars can be in contact with each other or be separated with an anti-friction strip, preferably made from polyethylene, polypropylene, tetrafluoroethylene, nylon, or another wear-resistant polymer material. The first drive mechanism can be connected to the first lateral bar and the third lateral bar to extend and retract the third lateral bar relative to the first lateral bar. The second drive mechanism can be connected to the second lateral bar and the fourth lateral bar to extend and retract the fourth lateral bar relative to the second lateral bar. The third lateral bar and the fourth lateral bar can be connected in parallel with a drive motor. The drive motor can be set up so that it simultaneously extends the third lateral bar and the fourth lateral bar, respectively, relative to the first lateral bar and the second lateral bar. This design makes it possible to extend and retract the bottom conveyor belt relative to the top conveyor belt.

US20110297591 discloses a system of conveyors used to separate recycled mixed materials. The main elements of the machine include the feeder mechanism and the separating conveyor belt. The feeder mechanism puts the recycled materials on the central part of the separating conveyor belt with a system of rotary rammers hitting the bottom of the conveyor's belt. Heavier recycled materials reflect from the conveyor belt and fall down at the bottom end, and lighter recycled materials are transferred to its top end by the conveyor belt movement. Both conveyor belts are inclined, advantageously at an angle of 40-45°. The rotary rammers have arms with a variable length and are located at different places below the belt of the separating conveyor to ensure various degrees of mixing of the recycled materials. For example, in one of the embodiments, the rammers on two drive shafts adjacent to the top end of the separating conveyor belt have a slightly larger radius to increase the mixing of the recycled materials. This makes it possible to ensure that any cans or bottles approaching the top end of the conveyor belts are removed from the remaining recycled materials and fall to the bottom end of the system. Optionally, a fan or blower can be used to direct air at the top conveyor belt so that lighter recycled materials (e.g.: paper and corrugated material) can be held on the conveyor belt, where these materials are carried by the conveyor belt to its top end.

Modular screening machines for recycled materials become increasingly popular owing to the possibility of adjusting the machine to specific requirements. Mobile waste recycling machines are known to be more versatile than stationary machines since they can be used not only at fixed waste treatment stations but also at construction sites and other facilities where high waste volumes are generated. To carry the machine on public roads, it has to meet the conditions pursuant to the traffic code requirements. One of the key conditions is the size of the machine to be transported. Ballistic screening machines are so large during operation that they would have to be transported using special convoys. Therefore, a modular design of the ballistic sorting machine is used that allows the machine to be folded into the so-called transport position so that the machine size does not interfere with the traffic of other road users. It is important that the machine with a modular design does not lose its technical capacity to adjust sorting parameters.

The aim of the invention is an efficient and simple-to-adjust unit of a screening machine to separate waste in terms of its structure and shape that allows it to be attached to another machine used to recycle waste and enables folding the machine to a transport position.

The subject of the invention is a screening machine unit containing a frame with an infeed conveyor mounted in a rotary fashion relative to the pin, with a conveyor belt located below the infeed conveyor characterised in that the conveyor belt is attached to the infeed conveyor using engaging half-frames with running rollers connected in a stationary manner with the infeed conveyor using a removable screw connection, and connected with the conveyor belt in a sliding manner using a linear feeding system containing rollers and a guide assembly comprising a left guide and a right guide, both connected in a sliding manner with the conveyor belt, wherein the linear outfeed of the conveyor belt along the right guide and the left guide constitutes an area of separation relative to the infeed conveyor.

The running rollers in the conveyor belt are located on external walls parallel to the side walls of the belt, wherein they are separated from each other on the same wall.

Preferably, a hydraulic actuator is located between the engaging half-frames and the guide assembly, wherein one of the actuator ends is connected with the engaging half-frames and the second actuator end is connected with the guide assembly. Preferably, a second hydraulic actuator is located between the guide assembly and the conveyor belt, wherein one of the second actuator ends is connected with the guide assembly and the second end is connected with the conveyor belt.
Preferably, the left guide and the right guide are connected with each other using external couplings, and the left guide and the right guide have a pair of guides directed outward and inward, wherein each guide of the pair is separated from another. Stops are installed at the end of the left guide and the right guide.
Another advantageous solution is characterised in that the engaging half-frame has at least two arrays of rows of mounting openings perpendicular to a straight line connecting the running roller axes. The first mounting opening in the row is located relative to the running roller axes at a distance equal to the separation gap, which is 417-555 mm, and the mounting openings in the row are spaced 46-138 mm from each other.
Preferably, the spacing of the running rollers in the engaging half-frame exceeds 700 mm.

The use of the guide assembly with guides directed outward and inward in the modular screening machine ensures a pair of sliding connections, which results in an increased total feed-out at the minimum size of the folded module. With rows of openings on half-frames, it is possible to tighten the half-frames in several positions to the infeed conveyor to allow the adjustment of the distance of the conveyor belt to the infeed conveyor. The connection of the left guide and right guide using external couplings enhances the rigidity of the structure and facilitates installation. The use of shock-absorbing stops at the guide ends reduces the dynamic stress induced by the impact of parts sliding relative to each other at extreme feed-out. The use of separate hydraulic actuators to extend the unit ensures better adjustment of the conveyor feed-out (S1+S2) during operation, which, as a result, allows follow-up adjustment of the cleanliness (quality) of the screened fraction.
Furthermore, the use of the linear movement along the right guide and the left guide allows the adjustment of the size of the area of separation relative to the infeed conveyor.

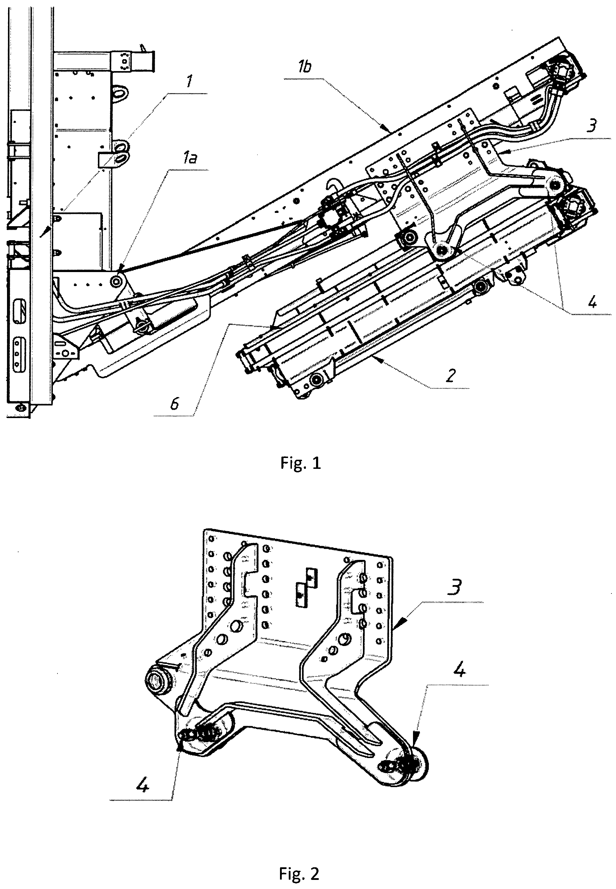

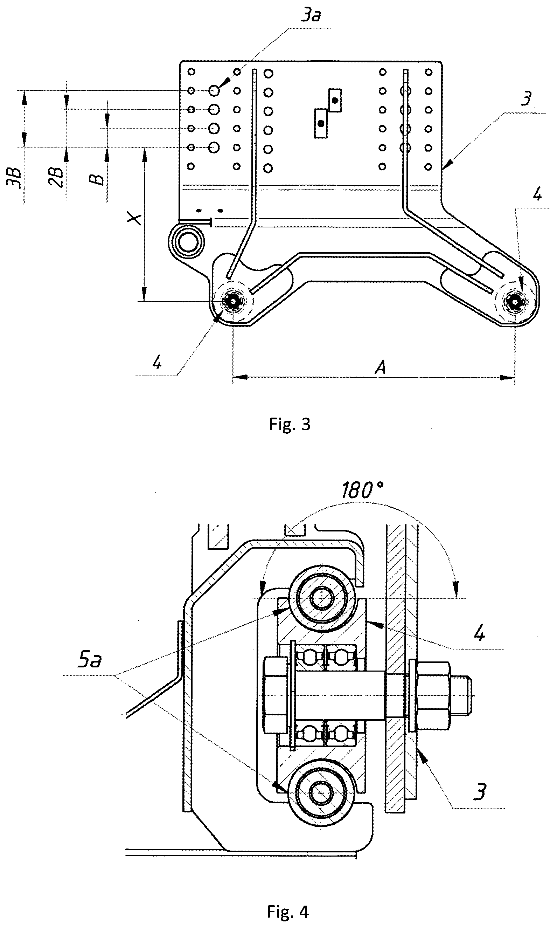

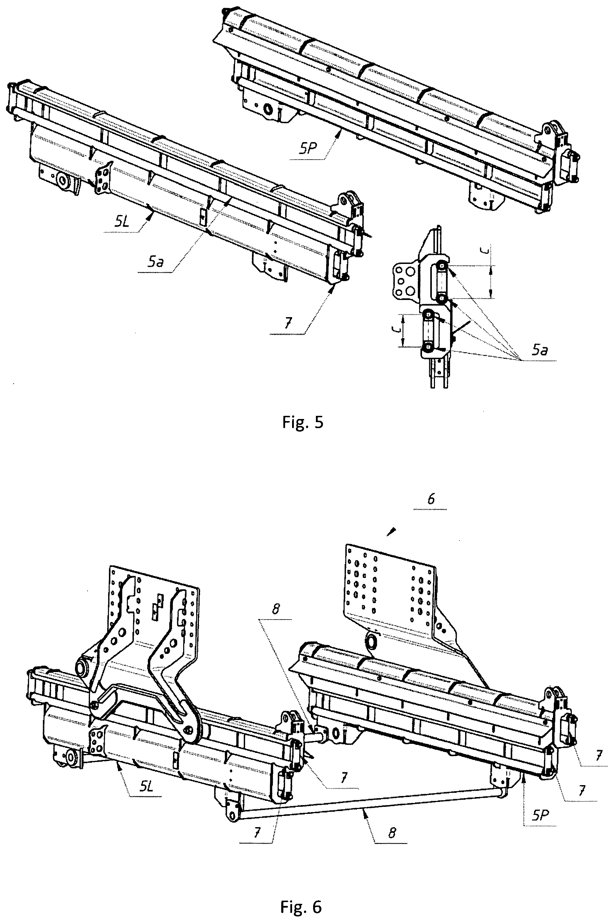

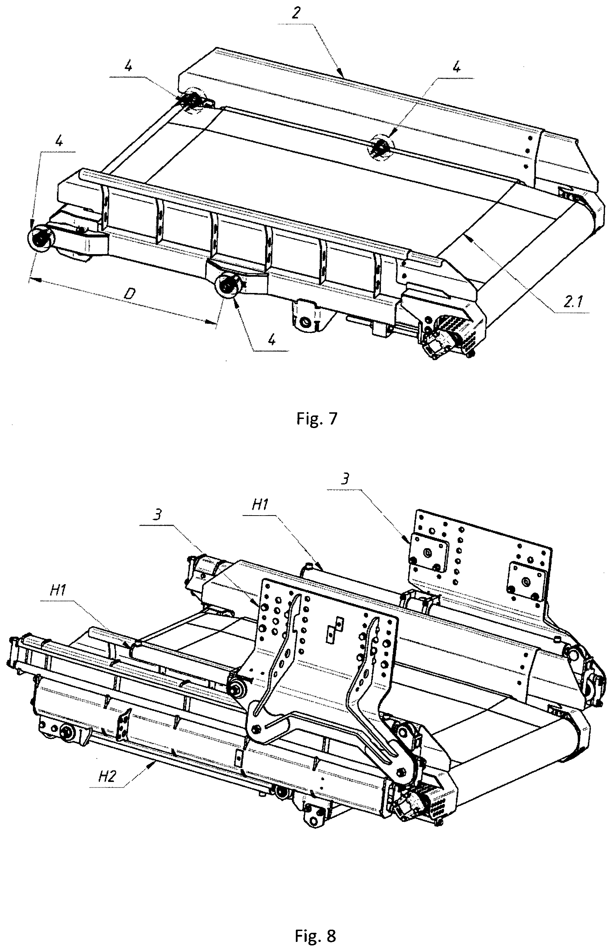

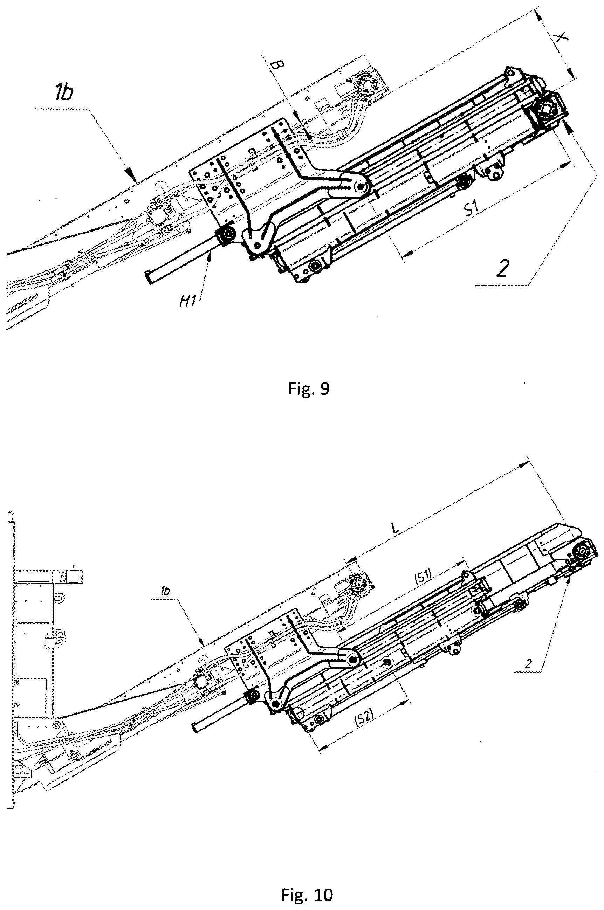

The subject of the invention is reproduced in an embodiment in the drawing, where Fig. 1 presents a front view of the screening machine unit, Fig. 2 presents a perspective view of the half-frame of the sliding mechanism, Fig. 3 presents a front view of the half-frame of the sliding mechanism, Fig. 4 presents a section view of the sliding connection of the running rollers with guide rails, Fig. 5 presents a perspective view of the guides, Fig. 6 presents a perspective view of a complete guide assembly, Fig. 7 presents a perspective view of the conveyor belt, Fig. 8 presents a perspective view of the conveyor belt connected with the guide assembly, Fig. 9 presents a front view of the screening machine unit with the guide assembly extended to the extreme position relative to the infeed conveyor, and Fig. 10 presents a front view of the screening machine unit with the guide assembly extended to the extreme position relative to the infeed conveyor and extended to the extreme position relative to the guide assembly.

The screening machine unit consists of the infeed conveyor 1b mounted in a rotary fashion relative to the pin 1a to the frame 1, under which the conveyor belt 2 with the area of separation 2.1 is suspended. The suspension structure consists of the engaging half-frames 3 (right and left) connecting the conveyor with the separator. The conveyor belt 2 is mounted to the infeed conveyor 1b using the engaging half-frames 3 with the running rollers 4 that are connected stationary with the infeed conveyor 1b using the removable screw connection. The rollers are connected with the conveyor belt 2 in a sliding manner using a linear extension system consisting of the rollers 4 and the guide assembly 6. The engaging half-frames 3 gave a spatial structure comprising bent and welded metal sheets that provide high rigidity. They have the running rollers 4, which are mounting elements and are provided with bearings. The shape of the running roller 4 is similar to the shape of the rails 5a of the right guide 5P and the left guide 5L, which allows easy movement in a longitudinal direction and protects the screening machine from lateral separation. The shape of the running roller 4 surrounds the guide rail 5a. The angle at which the roller 4 surrounds the rail 5a is 180 degrees. The spacing A of the running rollers 4 in the engaging half-frames 3 is large enough to ensure the rigidity of the structure on extension in relation to the machine weight and the extension. The engaging half-frames 3 perpendicular to the straight line connecting the axes of the running rollers 4 have rows of mounting openings 3a. With four sets of positioning mounting openings 3a, it is possible to adjust the suspension height of the screening machine relative to the feeding conveyor 1b. Pairs of mounting openings 3a are spaced at a fixed value B. This makes it possible to select the space between the rollers depending on the size of the screened material. Given the minimum value of the separation gap X resulting from the shape of the engaging half-frames 3, it can be increased or decreased by a value ranging from B, 2B, to 3B. The engaging half-frames 3 are connected through the running rollers 4 with the left guide 5L and the right guide 5P, which form the guide assembly 6. The guides of the guide assembly 6 are made as external and internal guides, which means that they have the guide assemblies 5a comprising the external and internal rails. The vertical spacing C of the internal and external rails 5a is the same, but their lengths are different. The external rails 5a are longer, and the internal rails are shorter, which results from the system's kinematics. The design of the left guide 5L and the right guide 5P is a typical lattice design. All the rails 5a are interconnected using vertical ribs, and the entire structure is enclosed with side metal sheets, which reinforce the structure and protect the rails 5a and the running rollers 4 from soiling. The external and internal rails 5a are provided with stops 7 at the ends, which absorb shocks owing to the use of Belleville springs that protect from uncontrolled (emergency) system separation. With the use of the external and internal rails 5a in the left guide 5L and the right guide 5P, two independent extension stages are obtained, and a small size is maintained. The external rails 5a mate with the running rollers 4 of the engaging half-frames 3. They ensure the first feed-out stage S1 and bind the guide assembly 6 at a specific width in the assembly's top section. The bottom part of the left guide 5L and the right part 5P is bound using external couplings 8. With this solution, a rigid guide assembly 6 is obtained. This is a typical gantry design. After folding the guide assembly 6 with the engaging half-frames 3 provided with the running rollers 4, a free movement S1 is obtained. The guide assembly 6 is extended using a pair of hydraulic actuators H1 anchored accordingly on both sides in the engaging half-frames 3 and accordingly for the feed-out in the guide assembly 6. The external rails 5a mate with the conveyor belt 2 structure, which has a typical frame design. The frame 1 of the conveyor belt 2 is provided on both sides with lugs with spacing D, intended for the installation of the running rollers 4. After installing the conveyor belt 2 with the running rollers 4, the conveyor is mounted on the internal rails 5a of the guide assembly 6. After folding the conveyor belt 2, the running rollers 4, and the guide assembly 6, a free movement S2 is obtained. The conveyor belt 2 is extended relative to the guide assembly 6 using a pair of second hydraulic actuators H2 anchored in the guide assembly 6 and in the conveyor belt 2. The total length of movement of the screening machine from the start position to the end position is S1+S2. The linear movement L along the length S1+S2 allows the screening machine to be moved from the transport position to the operating position with optimum extension of the conveyor belt 2 relative to the infeed conveyor 1b. The value of advance of the conveyor belt 2 is independent of the position of the infeed conveyor 1b and can be adjusted (changed) during operation of both conveyors to obtain a specific fraction. With the use of the engaging half-frames 3 with four sets of mounting openings 3a, it is also possible to adjust the size of the separation gap X between the conveyor belt 2 and the infeed conveyor 1b. The angle of inclination of the conveyor belt 2 changes with the angle of inclination of the infeed conveyor 1b. The settings, i.e., two extension stages and the belt speed, are controlled by the hydraulic system. The hydraulic system supply and the belt drive are provided from the machine.

The screening machine unit is suitable to be attached to the machine used in the recycling process (e.g., a twin-shaft shredder or a drum sieve machine). The material to be recycled is carried via the infeed conveyor 1b which can be the conveyor belt 2 with a flighted belt, advantageously with V-shaped flights. The material from the infeed conveyor 1b is unloaded to the conveyor belt 2, suspended below the infeed conveyor, provided with a flat belt constituting the area of separation 2.1. The linear movement of the conveyor belt 2 along the right guide 5P and the left guide 5L constitutes the size of the area of separation 2.1 relative to the infeed conveyor 1b. Materials with a greater weight and spatial share (e.g., cans, stones, etc.) gain momentum due to a free fall, fall down to the belt of the conveyor belt 2, bounce, and roll down. Due to their small weight and flat shape, lighter and flat materials (e.g., foil, paper, etc.) fall down to the conveyor belt and are collected and carried upward on the conveyor belt 2. The separator allows two fractions to be obtained. In this case, the parameters that define the separation capacity include the suspension height of the conveyor belt 2 relative to the discharge point of the infeed conveyor 1b, the angle of inclination, the advance of the conveyor belt 2, the speed of the belt, and the belt type.

### List of symbols

1 - frame
1a - pin
1b - infeed conveyor
2 - conveyor belt
2.1 - area of separation
3a - mounting openings
3 - engaging half-frames
4 - running rollers
5a - internal and external rails
5L - left guide
5P - right guide
6 - guide assembly
7 - stops
8 - external couplings
H1 - hydraulic actuators anchored on both sides in the engaging half-frames 3
H2 - second hydraulic actuators anchored in the guide assembly 6 in the conveyor belt 2
A - spacing of the running rollers 4 in the engaging half-frames 3
D - spacing of the lugs to install the running rollers 4
C - vertical spacing of the rails 5a
X - size of the separation gap resulting from the shape of the engaging half-frames 3; B to 3B
L - linear movement
S1 - movement with a value of S1
S2 - movement with a value of S2

## Claims

1. A screening machine unit containing a frame (1) with an infeed conveyor mounted in a rotary fashion relative to the pin (1a), with a conveyor belt located below the infeed conveyor **characterised in that** the conveyor belt (2) is attached to the infeed conveyor (1b) using engaging half-frames (3) with running rollers (4) connected in a stationary manner with the infeed conveyor (1b) using a removable screw connection, and connected with the conveyor belt (2) in a sliding manner using a linear feeding system containing rollers (4) and a guide assembly (6) comprising a left guide (5L) and a right guide (5P), both connected in a sliding manner with the conveyor belt (2), whereby the linear feed-out of the conveyor belt (2) along the right guide (5P) and the left guide (5L) constitutes an area of separation (2.1) relative to the infeed conveyor (1b).

2. The screening machine unit, according to claim 1, is **characterised in that** the running rollers (4) in the conveyor belt (2) are located on external walls parallel to the belt side walls.

3. The screening machine unit, according to claim 2, is **characterised in that** the running rollers (4) on the same wall are separated by a distance (D).

4. The screening machine unit, according to claim 1, is **characterised in that** a hydraulic actuator (H1) is located between the engaging half-frames (3) and the guide assembly (6), whereby one of the actuator (H1) ends is connected with the engaging half-frames (3) and the second actuator end is connected with the guide assembly (6).

5. The screening machine unit, according to claim 1, is **characterised in that** a second hydraulic actuator (H2) is located between the guide assembly (6) and the conveyor belt (2), whereby one of the actuator (H2) ends is connected with the guide assembly (6) and the second end is connected with the conveyor belt (2).

6. The screening machine unit, according to claim 1, is **characterised in that** the left guide (5L) and the right guide (5P) are interconnected using the external couplings (8).

7. The screening machine unit, according to claim 6, is **characterised in that** the left guide (5L) and the right guide (5P) have a pair of rails (5a) directed outward and inward, wherein each rail (5a) of the pair is separated by a distance (C).

8. The screening machine unit, according to claim 6, is **characterised in that** stops (7) are installed at the end of the left guide (5L) and the right guide (5P).

9. The screening machine unit, according to claim 1, is **characterised in that** the engaging half-frame (3) has at least two arrays of rows of mounting openings (3a) perpendicular to a straight line connecting the running roller (4) axes.

10. The screening machine unit, according to claim 9, is **characterised in that** the first mounting opening (3a) in the row is separated from the running roller (4) axes by the size of the separation gap (X), which is 417-555 mm.

11. The screening machine unit, according to claim 9, is **characterised in that** the mounting openings (3a) in the row are separated by a distance (B), which is 46-138 mm.

12. The screening machine unit, according to claim 1, is **characterised in that** the spacing (A) of the running rollers (4) in the engaging half-frame (3) exceeds 700 mm.
